Europäisches Patentamt

European Patent Office

Office européen des brevets

(19)

(11) Publication number: **0 256 188**
**A1**

# (12) EUROPEAN PATENT APPLICATION

(21) Application number: 86306406.9

(22) Date of filing: 19.08.86

(51) Int. Cl.⁴: **H02G 7/18**

(43) Date of publication of application:
24.02.88 Bulletin 88/08

(84) Designated Contracting States:
**BE DE FR IT NL**

(71) Applicant: **Reedy, Irving**
**3560 Holliday Avenue**
**Apopka Florida 32703(US)**

(72) Inventor: **Reedy, Irving**
**3560 Holliday Avenue**
**Apopka Florida 32703(US)**

(74) Representative: **Lambert, Hugh Richmond et al**
**D. YOUNG & CO. 10 Staple Inn**
**London, WC1V 7RD(GB)**

(54) Electrical transmission systems.

(57) An electrical power transmission system is described comprising at least one high potential power conductor (1, 2, 3) positioned vertically above two neutral conductors (4, 5) and to which a broken conductor guard (8) is connected. The broken conductor guard (8) comprises a conductive rod electrically connected transverse to the neutral conductors (4, 5). The rod extends a predetermined distance on each side of the two neutral conductors (4, 5) in a substantially horizontal plane such that a broken high-potential conductor (1, 2, 3) will fall on the rod and be short-circuited to the neutral conductors.

FIG.1

FIG.3

## ELECTRICAL TRANSMISSION SYSTEMS

This invention relates to overhead electrical transmission systems comprising a device, herein called a broken conductor guard, which prevents high voltage electrical wires that have been broken by accident or by metal fatigue from falling to the ground and remaining there for long periods of' time, thus endangering human lives and property.

During the history of overhead high voltage electric power line operation, thousands of people and domestic animals have been killed and thousands more have been seriously injured by electric shock from conductors which have mechanically failed, fallen on high resistance sand or rock and which have remained energized for long periods of time. The conductors remain energized because the resistance to electric current flow of the return path to the electrical neutral is so high that insufficient current flows in the faulted conductor wire to cause protective fuses to blow, or in the case of main feeder circuits, to signal the power circuit breaker to open and de-energize the line.

According to this invention a device is provided which when attached to the neutral wires in the span between supporting poles of an overhead electric distribution line or transmission line, will establish and provide a low resistance path to neutral for the electric current to follow. When an energized phase conductor wire inadvertently breaks and falls across the device an abnormally high electrical current flow will cause upstream protective overload fuses to blow, or will signal power circuit breakers to open, thus de-energizing the faulted conductor and protecting from injury or death anyone who might come into physical contact with the fallen conductor.

More particularly, the present invention provides an electrical power transmission system including at least one high-potential power conductor positioned vertically above two neutral conductors attached adjacent to a power pole, and a broken conductor guard comprising a conductive rod electrically connected to and oriented transversely with respect to the neutral conductors and extending a predetermined substantially horizontal distance on each side thereof such that a broken high-potential power conductor will fall on said rod and be short-circuited to the neutral conductors.

In a particular system comprising three live conductors and a neutral, a second neutral line is provided parallel with the first neutral, with both neutrals lying in a horizontal plane below the three live conductures. Broken conductor guards or rods are then secured to the two neutrals so that they extend transversely across the power transmission system in a horizontal plane below the live conductors to catch and short circuit the live conductors should any of them break accidentally.

The invention will be further described with reference to the accompanying drawings in which:

Figure 1 illustrates a broken conductor guard in accordance with the present invention;

Figure 2 illustrates a top plan view of typical power lines in conjunction with broken conductor guards; and

Figure 3 illustrates an elevation view of power lines having a broken line contacting broken conductor guards.

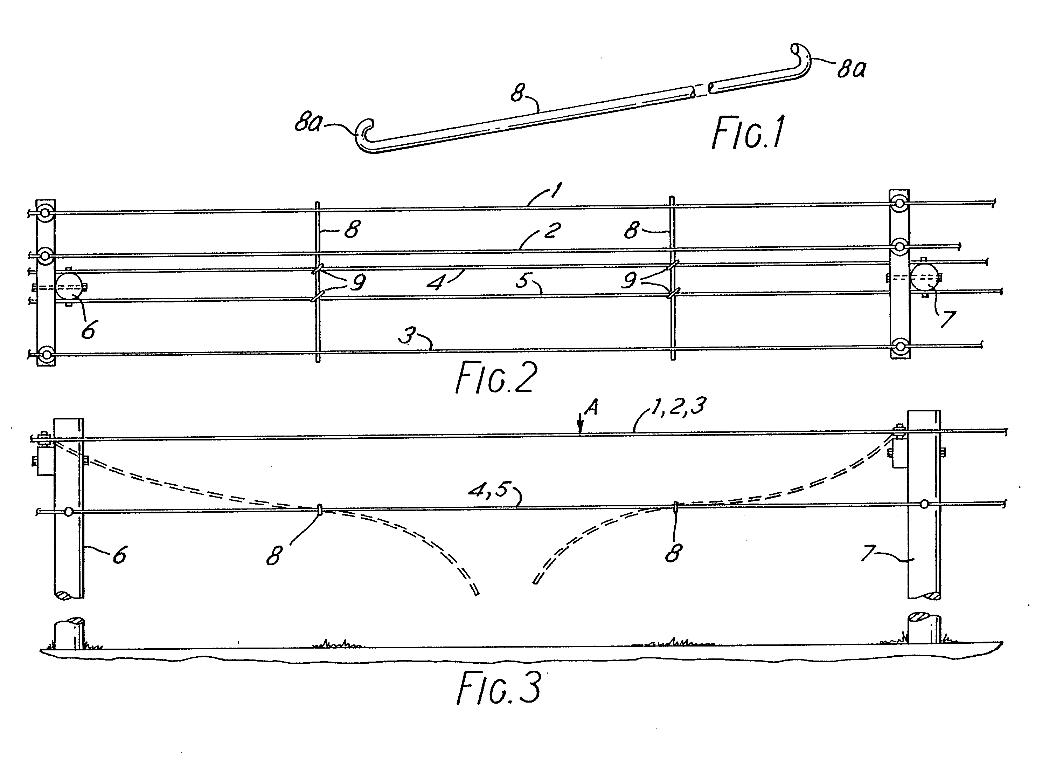

As shown in Figure 1, the device generally comprises an elongated rod (8) with hooked ends (8a) and which may be fabricated from drawn copper or aluminium alloy metal. The rod (8) is of large enough diameter to support the weight of the conductor (1, 2, 3). The ends (8a) of the rod are turned upwards and back towards the centre to prevent the fallen conductor from sliding off (see Figure 1). The length is sufficient to extend approximately six inches (15 cms) farther out from the neutral lines (4, 5) than the alignment of the outside energized conductors (1, 3). For this reason the length of the rod will vary from approximately two feet (0.6 m) for a single phase (one single energized conductor) to approximately twelve feet (3.6 m) for a three phase line employing wooden crossarms for conductor support. In other words, the length of the rod will vary depending upon the specific type of line design. The longer rods (8) also would be larger in diameter (see Figure 1). In use, the device (8) will be placed two or more to a span and at a distance from the poles (6, 7) which would afford optimum opportunity for the falling conductor (1, 2 or 3) to make contact with at least one of the rods (8).

Figure 2 shows a typical positioning of the device (8) on a power line in plan view, and Figure 3 illustrates the performance of the device in elevation or side view, arrow A indicating the accidental point of breakage of one of the live conductors (1, 2, 3) and the dotted line indicating the broken line caught by the broken conductor guards, and causing a short circuit to the neutral lines (4, 5).

The broken conductor guards (8) are clamped to the neutral lines (4, 5) by means of bolt clamps (9).

As will be apparent, the broken conductor guards lie in a horizontal plane located below the live conductors (1, 2, 3) and supported by the two parallel neutral lines (4, 5).

## Claims

1. An electrical power transmission system of the type comprising at least one high-potential power conductor (1, 2, 3) positioned vertically above two neutral conductors (4, 5) spanning adjacent power poles (6, 7), characterised in that the system comprises one or more broken conductor guards effective to short circuit the live and neutral conductors in the event of a breakage occuring in the live conductor, said broken conductor guard comprising a conductive rod(s) electrically connected to and oriented transversely with respect to the neutral conductors (6, 7) and extending a predetermined substantially horizontal distance on each side thereof such that a broken high-potential power conductor (1, 2 or 3) will fall on said rod (8) and be short-circuited to the neutral conductors (6, 7).

2. An electrical power transmission system according to claim 1, comprising at least two high-potential power lines (1, 2, 3) supported above the ground by spaced power poles (6, 7) and a third, neural line (4) spanning said poles (6, 7) and positioned vertically below said power lines (1, 2, 3), characterised in that there is provided:

(a) a second neutral line (5) spanning said poles (6, 7), said second neutral line (5) being parallel to and displaced horizontally from the first neutral line (4) for establishing a neutral plane below the high-potential power lines (1, 2, 3), the horizontal distance between the first and second neutral lines (4, 5) being less than the distance between the high-potential power lines (1, 2, 3);

(b) at least one electrically conductive rod (8) connected transversely to and supported by the first and second neutral lines (4, 5) between said poles (6, 7), said rod (8) extending horizontally beyond each neutral line (4, 5) whereby a broken high-potential power line (1, 2, 3) above said rod (8) will contact said rod when falling vertically;

(c) clamping means (9) attaching each rod (8) to said first and second neutral lines (4, 5); and

(d) means (8a) for at least temporarily capturing a falling line (1, 2, 3) on said rod (8).

3. A system according to claim 1 or 2, characterised in that said rod or rods (8) have upwardly curved ends (8a) to capture, at least temporarily, a falling power line.

4. A system according to claim 1, 2 or 3, characterised in that a plurality of said rods (8) are positioned on said neutral lines (4, 5) and spaced therealong between adjacent poles (6, 7).

*FIG.1*

*FIG.2*

*FIG.3*

0 256 188

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 310 070 (FENNELL) <br> * Page 1, lines 77-82; page 2, lines 1-10,94-96,108-117; page 3, lines 2-9; figure 4 * | 1,2,4 | H 02 G 7/18 |
| Y | | 3 | |
| Y | DE-C- 254 020 (WECKEN) <br> * Page 1, lines 13-22,53-58; figures 1,3 * | 3 | |
| A | GB-A- 293 533 (IMPROVEMENTS) <br> * Page 3, lignes 98-126; figures 9,10 * | 1-4 | |
| E | US-A-4 616 287 (REEDY) <br> * Column 2, lines 10-61; figures 1-3 * | 1-4 | TECHNICAL FIELDS SEARCHED (Int. Cl.4) <br><br> H 02 G 7/00 |

The present search report has been drawn up for all claims

| Place of search | Date of completion of the search | Examiner |
|---|---|---|
| THE HAGUE | 07-05-1987 | TIELEMANS H.L.A. |